Europäisches Patentamt

European Patent Office

Office européen des brevets

(11) Publication number: **0 389 275**
**A1**

## EUROPEAN PATENT APPLICATION

(21) Application number: **90303070.8**

(22) Date of filing: **22.03.90**

(51) Int. Cl.5: **B01D 17/02, B01D 19/02,**
**C02F 1/40, B03D 1/02**

(30) Priority: **22.03.89 ZA 892177**

(43) Date of publication of application:
**26.09.90 Bulletin 90/39**

(84) Designated Contracting States:
**BE DE DK ES FR GB GR IT NL**

(71) Applicant: **Essop, Saleam**
**97 Sir Kurma Reddi Road**
**Clairwood, Natal Province(ZA)**

(72) Inventor: **Essop, Saleam**
**97 Sir Kurma Reddi Road**
**Clairwood, Natal Province(ZA)**

(74) Representative: **Smith, Philip Antony et al**
**REDDIE & GROSE 16 Theobalds Road**
**London WC1X 8PL(GB)**

(54) **Skimming apparatus.**

(57) A skimming apparatus is described for skimming a surface layer of a liquid from a liquid body. The apparatus includes a hollow body (12) which can be partially submerged in a liquid body . Liquid enters the body (12) through one end. A baffle plate (18) is provided which deflects the surface layer of the liquid through one passage (20) and the rest of the liquid body through a second passage (22). Outlets (24) and (26) are provided through which the surface layer and the rest of the liquid body can be displaced. The body (12) also includes a U section ( 34) provided in line with the second passage, which provides stability to the apparatus in its operative configuration.

More particularly, the invention relates to a liquid skimming apparatus for skimming a surface layer of liquid from a liquid body.

According to this invention, there is provided a liquid skimming apparatus for skimming a surface layer of a liquid from a liquid body, characterized in that the apparatus includes:

a hollow body defining at one end an inlet and at the other end at least two outlets spaced apart from each other, said two outlets being connectable to fluid displacement means for displacing a liquid through the said body and via the said inlets and the said outlets, and

a baffle plate for separating from liquid passing through the said body, the surface layer of the liquid, the said baffle plate dividing the said hollow body into a first passage leading into at least one of the outlets through which a separated surface layer of liquid can be displaced and a second passage leading into at least another of the outlets through which the rest of the liquid can be displaced.

The hollow body may have a generally square, rectangular or cylindrical configuration. The hollow body may be of a suitable material which may be resistant to liquid in which the apparatus of the invention is used.

A screen may be provided at the inlet for preventing large-sized floating debris or other bodies from being drawn into the hollow body, and for breaking any waves on the liquid being drawn into the body.

The baffle plate may be provided within the body. The baffle plate may be located generally at an angle to a horizontal plane within the hollow body in its operative configuration and may define a leading edge spaced from the inlet defined by the hollow body. The baffle plate may be inclined downwards towards the inlet to assist in the separation of the surface layer into the first passage and the rest of the liquid into the second passage. The angle of inclination of the baffle plate may be adjustable and may be such that liquid may be deflected into the passages. The first passage may be defined above the baffle plate whereas the second passage may be provided operatively below the baffle plate. The second passage may further define a 'U' section between its inlet and its outlet. The 'U' section may be an integral part of the hollow body.

Particularly, the hollow body may include a hollow section projecting angularly downwards from the hollow body in its operative configuration, said hollow section defining a passage in the form of a U - section therein, said U - section passage being in line with the second passage between its inlet and outlet for displacement of the rest of the liquid therethrough.

The apparatus may include displacement means for displacing the surface layer and the rest of the liquid through the hollow body. The displacement means may be connected to the outlets for separately displacing the surface layer and the rest of the liquid through the first and second passages. The displacement means may be in the form of suction means. The suction means may be suction pumps, the suction ends of which may be connected to the respective outlets of the first and second passage. The suction means for the first passage may further incorporate a negative pressure suction chamber.

The rate of displacement of the surface layer and the rest of the liquid through the outlets of the hollow body may be adjustable for accommodating different volumes of liquid required to be displaced through the respective outlets.

The apparatus may further include a support structure for supporting the apparatus in a body of liquid in an operative configuration in which the baffle plate and the part of the apparatus therebelow is submerged in the liquid, the arrangement clearly permitting separation of the surface layer from the rest of the liquid by deflection of the surface layer of the liquid towards the first passage defined above the baffle plate and the rest of the liquid towards the second passage defined below the baffle plate. The support structure may be in the form of floats permitting the apparatus to float on a liquid body in its required operative configuration. Means for adjusting the depth of submersion of the apparatus in the liquid may also be provided.

Displacing means may be provided for displacing the apparatus on a liquid surface while being supported in the partially submerged configuration.

The invention extends also to a method of skimming a surface layer of a liquid, which includes the steps of:

providing an apparatus defining a hollow body having an inlet at one end and at least two outlets spaced apart from each other at the other end, and a separating formation within the hollow body dividing the hollow body into a first and a second passage leading to the two outlets respectively,

partially submerging the hollow body in the liquid thereby permitting liquid to enter the hollow body through the inlet, and

separating the surface layer of the liquid from the rest of the liquid by the separating formation,

displacing the surface layer and the rest of the liquid through the first and the second passages respectively by means of suction means connected to the outlets, and collecting the surface layer and/or the rest of the liquid passing through the outlets.

The method may particularly include a step of displacing the apparatus on the liquid from which a surface layer has to be separated.

Still further the method may include a step of adjusting the separating formation and the rate of displacement through the outlets, to allow for a variance in the quantity of liquid to be skimmed.

The method may further include a step of filtering the liquid before delivering it to the apparatus.

The liquid may particularly be a mixture of oil and water and particularly water contaminated with oil and the invention extends to a skimming apparatus for skimming an oil film forming a surface layer on a water body and a method thereof.

It must be appreciated that the skimming apparatus of the invention may be provided in a cascade form so that an outflow from a first skimming apparatus can serve as an inflow for the subsequent skimming apparatus and son on, thereby increasing the concentration of the separated constituents, the rest of the liquid being returned to the liquid body.

The invention is described now, by way of example, with reference to an accompanying drawing, which is a schematic cross-sectional side view of a skimming apparatus, in accordance with the invention.

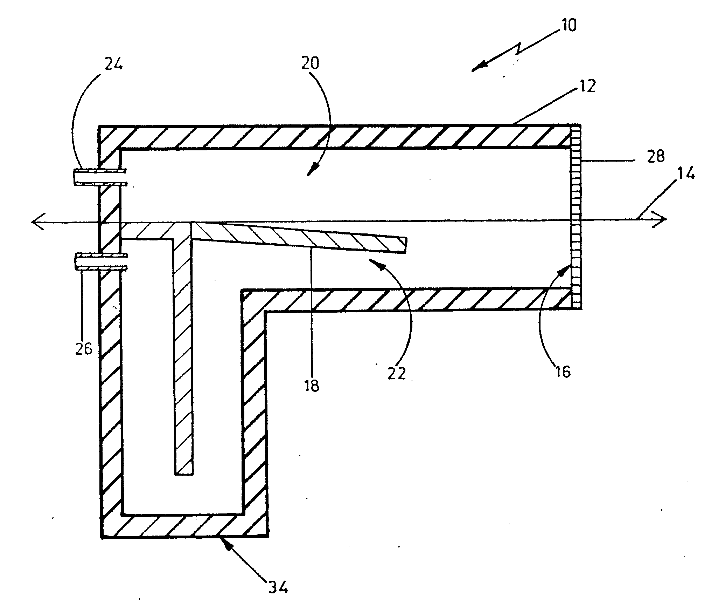

In the drawing, a liquid skimming apparatus, in accordance with the invention, is indicated generally by the reference numeral 10.

The liquid skimming apparatus 10 for skimming a surface layer of liquid from a liquid body, includes a hollow body 12 defining a central plane 14. The body 10 has an inlet 16 at one end through which can enter the body 10. Apparatus 10 includes a baffle plate 18 located within the hollow body 12, dividing the hollow body 12 into a first passage 20 and a second passage 22. The passages 20 and 22 are located distally from the inlet 16 end. The passages 20 and 22 lead to outlets 24 and 26 in the body 12.

The hollow body 12 has a generally cylindrical configuration. The hollow body 12 is of a suitable material which is resistant to the liquid in which the apparatus 10 of the invention is used.

A grid screen 28 is provided at the inlet 16 for preventing large sized floating debris or other bodies from being drawn into the apparatus 10.

The baffle plate 18 is located generally within the plane 14 and defines entrances to the first 20 and the second passage 22. The baffle plate 18 is inclined downwards towards the inlet 16 to assist in the separation and deflection of a surface layer of liquid passing through the body towards the first passage 20 and the rest of the liquid towards the second passage 22.

The apparatus 10 further includes a support structure (not shown) for supporting the apparatus 10 in a body of liquid in an operative configuration of the invention, so that part of the apparatus 10 below and the plane 14 and therefore the baffle plate 18 is submerged in the liquid just below the surface layer of the liquid to be skimmed by the apparatus 10, the arrangement clearly permitting deflection and separation of the surface layer of the liquid towards the first passage 20 defined above the baffle plate 18 and the rest of the liquid towards the second passage 22 defined below the baffle plate 18.

The second passage 22 is clearly located operatively below the first passage 20. The second passage 22 further includes a 'U' section formation 34. The 'U' formation is defined in a laterally extending section integral with the hollow body 12 as seen in the drawing.

The apparatus 10 can further include displacement means which may be in the form of suction pumps (not shown) which are separately connected to the outlet 24 of the first passage 20 and the outlet 26 of the second passage 22 for separately displacing the surface layer of the liquid and the rest of the liquid mass towards the respective passages. The suction pumps and the respective outlets 24 and 26 can be connected to each other by suitable pipelines. The displacement means connected to the outlet 24 can further include a negative pressure suction chamber (not shown) for control of liquid to be displaced therethrough. Liquid displacement means not forming part of the apparatus as such, can also be utilised in conjunction with the apparatus.

Displacing means (not shown) may be provided for displacing the apparatus 10 on the surface of a liquid while being supported in its partially submerged configuration.

In use, the apparatus 10 is lowered in a liquid body by means of a support structure which may for instance, be floating buoys or even a ship, a boat, a pontoon or a hovercraft. The level of the body 12 in the liquid is adjusted so that it is partially submerged in the liquid and the baffle plate 18 lies just below the surface layer of the liquid body. In this configuration, the surface layer of the liquid is deflected into the first passage and the rest of the liquid is deflected to the second passage 22. Suction pumps may be connected to the outlets 24 and 26. These pumps enable the surface layer of the liquid to be displaced through the passage 20 and collected separately through the outlet 24. The rest of the liquid may be displaced through the second passage 22 and may be returned to the liquid body. The provision of the 'U' section facilitates an improved separation of the surface layer from the rest of the liquid. The 'U' formation is also useful in stabilising the apparatus, as the column of water in the 'U' section prevents the apparatus from capsizing.

It must be appreciated that the skimming apparatus 10 may be mounted on ships or derricks out at sea and therefore, may be particularly useful in recovering oil in the case of oil spills.

Scum, froth and other unwanted surface layers on a liquid body may also be removed by means of the apparatus 10.

## Claims

1. A liquid skimming apparatus for skimming surface layer of liquid from a liquid body, characterized in that the apparatus includes:
a hollow body (12) defining at one end an inlet (16) and at the other end two outlets (24,26) being connectable to fluid displacement means for displacing a liquid through a body via the inlet (16) and the outlets (24,26), and a baffle plate (18) for separating from liquid passing through the body (12), the surface layer of the liquid, the baffle plate (18) dividing the body (12) into a first passage (20) leading into one of the outlets (24) through which a separated surface layer of liquid can be displaced and a second passage (22) leading to the other of the outlets (26) through which the rest of the liquid can be displaced.

2. A liquid skimming apparatus as claimed in Claim 1 in which the hollow body (12) includes a hollow section (34) projecting angularly downwards from the hollow body in its operative configuration, said hollow section being in the form of a section defining a 'U' section passage therein, said 'U' section passage being in line with the second passage (22) between its inlet and outlet (26) for displacement of the rest of the liquid there through.

3. A method of skimming a surface layer of a liquid, characterized in that the method includes the steps of:
providing an apparatus defining a hollow body having an inlet at one end and at least two outlets spaced apart from each other at the other end, and a separating formation within the hollow body dividing the hollow body into a first and a second passage leading to the said two ou tie ts respectively,
partially submerging the hollow body in the liquid thereby permitting the liquid to enter the hollow body through the inlet,
separating the surface layer of the liquid from the rest of the liquid by means of the separating formation,
displacing the surface layer and the rest of the liquid through the first and the second passages respectively by means of suction means connected to the said outlets, and
collecting the surface layer and/or the rest of the liquid passing through the outlets.

4. A method of skimming a surface layer of a liquid as claimed in Claim 3, in which the method includes a step of displacing the partially submerged hollow body on the liquid from which a surface has to be separated.

| | | Application number |
|---|---|---|
| European Patent Office | **EUROPEAN SEARCH REPORT** | |

| DOCUMENTS CONSIDERED TO BE RELEVANT | | | EP 90303070.8 |
|---|---|---|---|
| Category | Citation of document with indication, where appropriate, of relevant passages | Relevant to claim | CLASSIFICATION OF THE APPLICATION (Int Cl⁵) |
| A | EP - A1 - 0 072 888 (SOBINGER) * Claims; fig. 2 * ---- | 1,3 | B 01 D 17/02 B 01 D 19/02 C 02 F 1/40 B 03 D 1/02 |
| | | | **TECHNICAL FIELDS SEARCHED (Int Cl⁵)** |
| | | | B 01 D C 02 F B 03 D E 03 F E 02 B |

The present search report has been drawn up for all claims

| Place of search | Date of completion of the search | Examiner |
|---|---|---|
| VIENNA | 20-06-1990 | BECKER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82